# FASCICULE DE BREVET EUROPEEN

(11) **EP 3 994 804 B1**
(45) Date de publication et mention de la délivrance du brevet: **29.05.2024**
(21) Numéro de dépôt: 20732891.5
(22) Date de dépôt: 15.06.2020
(51) Int. Cl.: H04B 5/77, H04W 64/00, G01S 13/75

(54) **PROCEDE DE DETERMINATION D'AU MOINS UN EMPLACEMENT POUR LA RECEPTION D'UN SIGNAL AMBIANT RETRODIFFUSE**
VERFAHREN ZUR BESTIMMUNG MINDESTENS EINES ORTES FÜR DEN EMPFANG EINES RÜCKGESTREUTEN UMGEBUNGSSIGNALS
METHOD FOR DETERMINING AT LEAST ONE LOCATION FOR RECEPTION OF A BACKSCATTERED AMBIENT SIGNAL

(30) Priorité: 01.07.2019 FR 1907263
(43) Date de publication de la demande: 11.05.2022
(73) Titulaire: Orange, 92130 Issy-les-Moulineaux (FR)
(72) Inventeur: FARA, Romain, 92326 CHÂTILLON CEDEX (FR); PHAN HUY, Dinh Thuy, 92326 CHATILLON CEDEX (FR)
(74) Mandataire: Cabinet Beau de Loménie
(86) Numéro de dépôt international: PCT/EP2020/066501
(87) Numéro de publication internationale: WO 2021/001138

(56) Documents cités:
- CN-A- 107 861 100
- RACHEDI K ET AL: "Demo Abstract: Real-Time Ambient Backscatter Demonstration", IEEE INFOCOM 2019 - IEEE CONFERENCE ON COMPUTER COMMUNICATIONS WORKSHOPS (INFOCOM WKSHPS), IEEE, 29 avril 2019 (2019-04-29), pages 987-988, XP033619535, DOI: 10.1109/INFCOMW.2019.8845270
- VAN HUYNH NGUYEN ET AL: "Ambient Backscatter Communications: A Contemporary Survey", IEEE COMMUNICATIONS SURVEYS & TUTORIALS, vol. 20, no. 4, 31 décembre 2018 (2018-12-31), pages 2889-2922, XP011698260, DOI: 10.1109/COMST.2018.2841964 cité dans la demande

## Description

### Technique antérieure

La présente invention appartient au domaine général des télécommunications. Elle concerne plus particulièrement un procédé de détermination d'au moins un emplacement pour la réception, par au moins un dispositif récepteur, d'un signal radio ambiant destiné à être rétrodiffusé par au moins un dispositif transmetteur. Elle concerne également un procédé de communication entre au moins un dispositif transmetteur et au moins un dispositif récepteur, par rétrodiffusion d'un signal radio ambiant. L'invention trouve une application particulièrement avantageuse, bien que nullement limitative, pour des applications du type « Internet des objets » (« Internet of Things » ou IoT dans la littérature anglo-saxonne).

La technologie de rétrodiffusion ambiante est aujourd'hui bien connue. Les principes techniques sur lesquels s'appuie cette technologie sont décrits, notamment, dans le document de N. Van Huynh et al. intitulé « Ambient Backscatter Communications: A Contemporary Survey », in IEEE Communications Surveys & Tutorials, vol. 20, no. 4, pp. 2889-2922, Fourthquarter 2018.

Le document RACHEDI et al. «Demo Abstract: Real-Time Ambient Backscatter Démonstration » décrit afin réduire la consommation d'énergie et l'encombrement spectral, un procédé de transmission d'informations numériques en modulant les ondes électromagnétiques ambiantes émises par différentes sources RF telles que la diffusion TV, le Wifi.

De manière conventionnelle, la rétrodiffusion d'un signal ambiant s'effectue entre au moins un dispositif transmetteur et au moins un dispositif récepteur. En outre, et tel que cela est envisagé jusqu'à présent, lesdits dispositifs occupent chacun une position fixe.

Le signal ambiant concerné correspond à un signal radio émis, de manière permanente ou bien de manière récurrente, par une source dans une bande fréquentielle donnée. Par exemple, il peut s'agir d'un signal de télévision, d'un signal de téléphonie mobile (3G, 4G, 5G), d'un signal Wi-Fi, d'un signal WiMax, etc.

Pour communiquer avec un dispositif récepteur, un dispositif transmetteur exploite le signal ambiant pour envoyer des données vers ledit dispositif récepteur. Plus particulièrement, le dispositif transmetteur réfléchit le signal ambiant vers le dispositif récepteur, éventuellement en le modulant. Le signal ainsi réfléchi est dit « signal rétrodiffusé », et est destiné à être décodé par le dispositif récepteur.

Le fait qu'aucune onde radio supplémentaire (au sens d'une onde autre que celle résultant du signal ambiant) n'est émise par le dispositif transmetteur rend la technologie de rétrodiffusion ambiante particulièrement attractive. En effet, le coût énergétique d'une communication est ainsi optimisé, ce qui est notamment d'importance dans le contexte actuel de l'IoT où chaque objet de la vie courante a vocation à devenir un objet communicant.

Pour mettre en oeuvre cette technologie, le dispositif transmetteur est équipé d'au moins une antenne configurée pour recevoir le signal ambiant mais aussi le rétrodiffuser vers le dispositif récepteur.

Le dispositif transmetteur est également associé à des états de fonctionnement, dont au moins un état dit de « rétrodiffusion » (le dispositif transmetteur rétrodiffusé le signal ambiant) ainsi qu'un état contraire dit de « non-rétrodiffusion » (le dispositif transmetteur est transparent au signal ambiant). Ces états correspondent à des configurations dans lesquelles ladite au moins une antenne est connectée à des impédances distinctes.

Le dispositif récepteur, quant à lui, est configuré pour décoder le signal rétrodiffusé. Cela étant, et en pratique, la mise en oeuvre de ce décodage peut être détériorée (erreur de décodage, mauvaise réception du signal rétrodiffusé) en raison de l'existence d'interférences au niveau du dispositif récepteur.

En effet, les dispositifs transmetteur et récepteur sont généralement positionnés dans un environnement de propagation complexe comprenant des éléments (murs, arbres, sol, etc.) susceptibles de générer des réflexions et des diffractions d'ondes émises par la source. Ainsi, et de manière schématique, deux types de signaux parviennent au dispositif récepteur : le signal rétrodiffusé, seul porteur des données utiles à la mise en oeuvre de la rétrodiffusion ambiante, ainsi qu'un signal provenant directement de la source dit « signal interférent » et résultant de multiples réflexions / diffractions d'ondes (par « directement », on fait référence ici à des ondes non issues du signal rétrodiffusé). Du fait desdites réflexions / diffractions, ledit signal interférent correspond à une somme d'ondes qui interfèrent entre elles de manière constructive ou bien destructive. En conséquence, la distribution de puissance générée par ce signal interférent n'est pas uniforme et présente des zones où la puissance est localement maximale ou bien, à l'inverse, localement minimale. Les zones où la puissance est localement maximale (respectivement localement minimale) sont des zones où le niveau d'interférences est le plus élevé (respectivement le moins élevé).

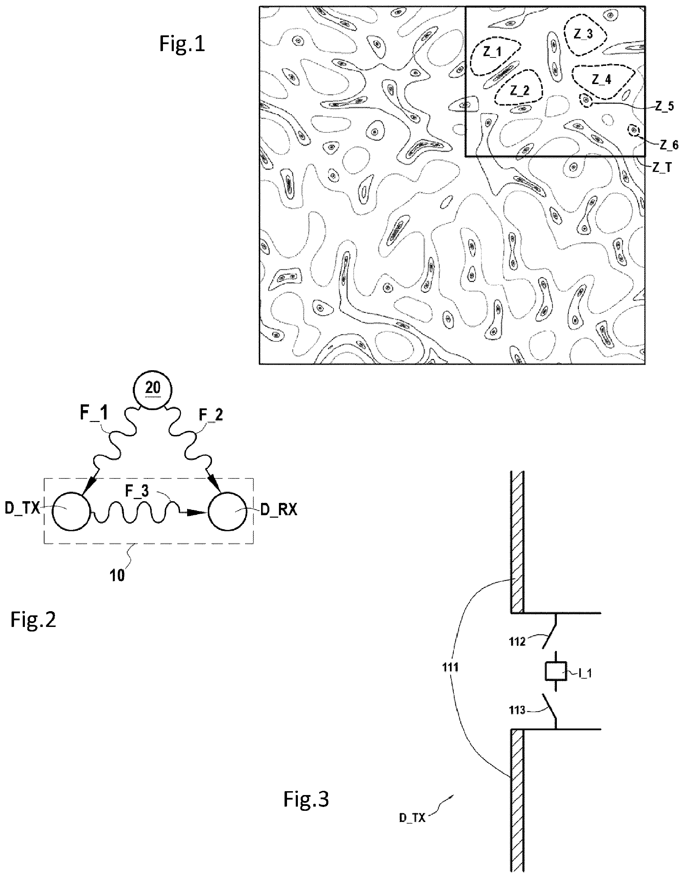

La figure 1 représente schématiquement une carte de distribution de puissance électromagnétique rayonnée par une source. Une telle carte a été générée de manière connue en soi par simulation numérique en considérant un modèle de propagation d'ondes correspondant à une distribution de Rayleigh. Les aspects liés à la modélisation de la propagation d'ondes sont bien connus de l'homme du métier, et ne sont par conséquent par rappelés ici.

Dans l'exemple de la figure 1, ladite source correspond à une tour de télévision émettant dans une bande fréquentielle égale à [583 MHz, 590 MHz]. Ladite carte correspond à un carré de côté égal à 1 m25. Les niveaux de puissance rayonnée sont représentés à l'aide de lignes de niveaux, étant entendu que plus une zone de la carte comporte des lignes qui se resserrent, plus cette zone correspond à un minimum local de puissance rayonnée.

Tel qu'illustré par la figure 1, la distribution de puissance présente une pluralité de minima locaux, et donc in fine également une pluralité de maxima locaux. A titre d'exemple, des zones Z_1, Z_2, Z_3 et Z_4, comportant chacune un maximum local de puissance rayonnée (puissance sensiblement égale à 5 dB), sont indiquées. Chaque zone Z_i, pour i variant de 1 à 4, couvre la portion de carte contenue à l'intérieur de la courbe en pointillés entourant le sigle « Z_i ». Deux autres zones Z_5 et Z_6, comportant chacune un minimum local de puissance rayonnée (puissance sensiblement égale à -6 dB), sont également indiquées, à l'aide de flèches. Chaque zone Z_i, pour i variant de 5 à 6, couvre la portion de carte contenue à l'intérieur de la courbe en pointillés pointée par la flèche associée à ladite zone Z_i.

En définitive, l'existence de zones où le niveau d'interférences est élevé, en complément du fait que les dispositifs transmetteur et émetteur occupent des positions fixes, se révèle être problématique pour assurer une bonne communication entre ces dispositifs. En effet, on comprend que si le dispositif récepteur occupe une position dans une zone de puissance localement maximale (par exemple une des zones Z_1, Z_2, Z_3 ou Z_4), le niveau d'interférences peut être suffisamment élevé pour que la mise en oeuvre du décodage du signal rétrodiffusé soit compromise, faisant ainsi échouer la communication entre les dispositifs.

Pour contourner cette problématique, il a été proposé des solutions mettant en oeuvre, au niveau du dispositif récepteur, des techniques de traitement du signal visant à estimer, dans un signal reçu par ledit dispositif récepteur, une composante due à de telles interférences. Une fois estimée, une telle contribution est retranchée afin de ne conserver que le signal utile au décodage, à savoir le signal rétrodiffusé. Ces techniques restent toutefois très complexes à mettre en oeuvre.

### Exposé de l'invention

La présente invention a pour objectif de remédier à tout ou partie des inconvénients de l'art antérieur, notamment ceux exposés ci-avant, en proposant une solution qui permette de déterminer un emplacement d'au moins un dispositif récepteur, de sorte à éviter qu'il ne puisse pas décoder, en raison d'interférences, un signal rétrodiffusé par au moins un dispositif transmetteur, et ainsi optimiser la communication entre ces dispositifs.

A cet effet, et selon un premier aspect, l'invention concerne un procédé de détermination d'au moins un emplacement pour la réception, par au moins un dispositif récepteur, d'un signal ambiant émis dans une bande fréquentielle, dite « bande d'émission », et destiné à être rétrodiffusé par au moins un dispositif transmetteur vers le dispositif récepteur, ledit dispositif transmetteur étant associé à :
- des états de fonctionnement, dont au moins un état dit de « rétrodiffusion » ainsi qu'un état contraire dit de « non-rétrodiffusion »,
- une bande fréquentielle, dite « bande de travail », incluse dans ladite bande d'émission, ledit dispositif récepteur étant associé à une zone ayant au moins une dimension supérieure à la moitié de la longueur d'onde correspondant à la fréquence centrale de ladite bande d'émission.

En outre, ledit procédé est mis en oeuvre par le dispositif récepteur lorsque le dispositif transmetteur est dans l'état de non-rétrodiffusion et comporte :
- une étape de parcours du dispositif récepteur dans au moins une partie de ladite zone,
- au cours du parcours du dispositif récepteur, une étape d'acquisition, en au moins un emplacement de ladite partie, de mesures de puissance électromagnétique reçue par ledit dispositif récepteur, lesdites mesures étant respectivement acquises dans des sous-bandes de ladite bande de travail,
- une étape de comparaison des mesures associées audit au moins un emplacement avec un seuil déterminé, ledit au moins un emplacement étant déterminé comme étant un emplacement de réception si au moins une desdites mesures est inférieure audit seuil.

Ainsi, le procédé de détermination selon l'invention permet d'envisager un parcours du dispositif récepteur au sein d'au moins une partie de ladite zone. Autrement dit, et contrairement aux procédés de l'état de la technique, le dispositif récepteur n'est pas contraint de rester fixe et peut avantageusement se déplacer dans l'optique de détecter au moins un emplacement en lequel la puissance électromagnétique reçue dans une sous-bande de la bande de travail est suffisamment faible pour que le niveau d'interférences associé permette d'envisager une bonne communication par rétrodiffusion avec le dispositif transmetteur.

On note d'ailleurs que dans la mesure où le procédé est mis en oeuvre lorsque le signal ambiant n'est pas rétrodiffusé, ledit au moins un emplacement correspond à une localisation en laquelle la puissance générée par le signal interférent est inférieure au seuil. Autrement dit, le procédé selon l'invention offre la possibilité d'optimiser la contribution du signal rétrodiffusé, en termes de puissance reçue par le dispositif récepteur, lorsque le dispositif transmetteur passe dans un état de rétrodiffusion.

Le fait de considérer des sous-bandes de la bande de travail permet de discrétiser cette dernière, offrant ainsi la possibilité de détecter finement au voisinage de quelles fréquences le niveau d'interférences est suffisamment faible pour envisager une communication efficace entre les dispositifs, étant entendu que ce niveau d'interférences varie en fonction de la fréquence considérée pour l'acquisition de mesures.

Le procédé de détermination selon l'invention offre donc la possibilité, dans le cas où un emplacement est effectivement déterminé, d'éviter l'échec d'une communication entre le dispositif transmetteur et le dispositif récepteur. L'invention surmonte ainsi avantageusement les désavantages présentés par les solutions de l'état de la technique et qui sont liés à la stationnarité des dispositifs transmetteur et récepteur.

En outre, le procédé de détermination selon l'invention est particulièrement simple à mettre en oeuvre en ce qu'il ne nécessite pas d'utiliser des techniques de traitement du signal complexes, comme par exemple des techniques qui viseraient à estimer et supprimer, dans un signal reçu par ledit dispositif récepteur, une composante due à des interférences.

Dans des modes particuliers de mise en oeuvre, le procédé de détermination d'au moins un emplacement peut comporter en outre l'une ou plusieurs des caractéristiques suivantes, prises isolément ou selon toutes les combinaisons techniquement possibles.

Dans des modes particuliers de mise en oeuvre, une pluralité d'emplacements est considérée lors de l'étape d'acquisition, ledit procédé comportant, lorsque plusieurs emplacements sont déterminés comme étant des emplacements de réception, une étape de sélection, parmi lesdits emplacements de réception, d'un emplacement, dit « emplacement optimal », dont une mesure de puissance électromagnétique associée est minimale parmi les mesures de puissance associées auxdits emplacements de réception.

Ledit emplacement optimal désigne donc un emplacement en lequel la puissance reçue depuis la source est minimisée, de sorte que le niveau d'interférences sera également minimal lorsque le dispositif récepteur occupera ledit emplacement optimal pour réceptionner le signal rétrodiffusé dans la sous-bande associée à la mesure pour laquelle la puissance est ainsi minimisée. De cette manière, la communication entre les dispositifs transmetteur et récepteur sera optimisée.

Dans des modes particuliers de mise en oeuvre, le parcours du dispositif récepteur est réalisé dans toute la zone.

Procéder de cette manière permet de maximiser la probabilité de trouver un minimum local de puissance lors du parcours du dispositif récepteur. En effet, plus le parcours est réalisé dans une zone étendue, plus la probabilité de trouver un minimum local de puissance est grande.

Dans des modes particuliers de mise en oeuvre, le parcours du dispositif récepteur est réalisé de manière autonome ou de manière assistée.

Dans des modes particuliers de mise en oeuvre, une pluralité d'emplacements est considérée lors de l'étape d'acquisition, les mesures étant acquises selon un pas de temps déterminé ou un pas de distance déterminé entre chaque emplacement dans ladite partie de la zone.

Dans des modes particuliers de mise en oeuvre, le dispositif transmetteur est associé à un schéma déterminé de fonctionnement dans le temps correspondant à des alternances entre l'état de non-rétrodiffusion et ledit au moins un état de rétrodiffusion, le dispositif récepteur ayant connaissance dudit schéma de fonctionnement.

De telles dispositions permettent avantageusement de faciliter la mise en oeuvre du procédé de détermination pendant que le dispositif transmetteur est dans l'état de non-rétrodiffusion, sans qu'il soit nécessaire qu'un opérateur intervienne.

Dans des modes particuliers de mise en oeuvre, une pluralité de dispositifs transmetteurs est considérée, les étapes dudit procédé étant mises en oeuvre lorsque lesdits dispositifs transmetteurs sont simultanément dans l'état de non-rétrodiffusion.

Selon un deuxième aspect, l'invention concerne un procédé de communication entre au moins un dispositif transmetteur et au moins un dispositif récepteur, par rétrodiffusion d'un signal radio ambiant émis dans une bande fréquentielle, dite « bande d'émission », ledit dispositif transmetteur étant associé à :
- des états de fonctionnement, dont au moins un état dit de « rétrodiffusion » ainsi qu'un état contraire dit de « non-rétrodiffusion »,
- une bande fréquentielle, dite « bande de travail », incluse dans ladite bande d'émission,
ledit dispositif récepteur étant associé à une zone fonction de ladite bande d'émission. En outre, ledit procédé comporte :
- une étape de détermination d'au moins un emplacement pour la réception selon un procédé de détermination conforme à l'invention,
- lorsqu'au moins un emplacement a été déterminé et que le dispositif transmetteur est dans l'état de non-rétrodiffusion, une étape de déplacement du dispositif récepteur dans la zone, de sorte à atteindre une position fixe fonction dudit au moins un emplacement déterminé,
- une étape de rétrodiffusion, par le dispositif transmetteur, du signal ambiant,
- une étape de réception, par le dispositif récepteur et dans la sous-bande associée à une mesure à partir de laquelle ledit au moins un emplacement a été déterminé, du signal ambiant rétrodiffusé.

Ainsi, une fois qu'au moins un emplacement a été déterminé, le dispositif récepteur peut se déplacer vers un tel emplacement en lequel il va occuper une position fixe, par exemple pendant une durée déterminée, pour réceptionner le signal ambiant rétrodiffusé par le dispositif transmetteur.

Dans des modes particuliers de mise en oeuvre, le procédé de communication peut comporter en outre l'une ou plusieurs des caractéristiques suivantes, prises isolément ou selon toutes les combinaisons techniquement possibles.

Dans des modes particuliers de mise en oeuvre, lorsqu'un emplacement optimal est déterminé, ladite position fixe correspond à la position du dispositif récepteur lorsqu'il a réalisé la mesure de puissance électromagnétique minimale associée audit emplacement optimal, la réception s'effectuant dans la sous-bande associée à ladite mesure de puissance minimale.

Dans des modes particuliers de mise en oeuvre, les étapes de détermination d'au moins un emplacement, de déplacement du dispositif récepteur de sorte à atteindre une position fixe, de rétrodiffusion et de réception sont itérées de manière récurrente.

De telles dispositions permettent de prendre en compte la variabilité de l'environnement dans lequel sont positionnés le dispositif transmetteur et le dispositif récepteur.

Typiquement, des éléments susceptibles de réfléchir et / ou diffracter les ondes issues du signal ambiant peuvent voir leurs positions respectives modifiées dans l'environnement proche des dispositifs transmetteur et récepteur. A titre d'exemple purement illustratif, si les dispositifs transmetteur et récepteur sont placés dans une pièce d'appartement et qu'un meuble est déplacé, un emplacement précédemment déterminé comme apte à la rétrodiffusion peut ne plus convenir. Par « ne plus convenir », on fait référence ici au fait que le niveau de puissance peut ne plus être inférieur au seuil, la distribution de puissance ayant été modifiée en raison du déplacement du meuble.

Ainsi, le fait d'envisager une mise en oeuvre récurrente du procédé de communication selon l'invention permet avantageusement au dispositif récepteur de s'adapter à un environnement susceptible d'évoluer.

Selon un troisième aspect, l'invention concerne un programme d'ordinateur comportant des d'instructions pour la mise en oeuvre d'un procédé de détermination d'au moins un emplacement selon l'invention ou d'un procédé de communication selon l'invention lorsque ledit programme est exécuté par un ordinateur.

Selon un quatrième aspect, l'invention concerne un support d'enregistrement lisible par un ordinateur sur lequel est enregistré un programme d'ordinateur selon l'invention.

Selon un cinquième aspect, l'invention concerne un dispositif récepteur pour la réception d'un signal radio ambiant émis dans une bande fréquentielle, dite « bande d'émission », et destiné à être rétrodiffusé par au moins un dispositif transmetteur vers ledit dispositif récepteur, ledit dispositif transmetteur étant associé à :
- des états de fonctionnement, dont au moins un état dit de « rétrodiffusion » ainsi qu'un état contraire dit de « non-rétrodiffusion »,
- une bande fréquentielle, dite « bande de travail », incluse dans ladite bande d'émission.

En outre, ledit dispositif récepteur est associé à une zone ayant au moins une dimension supérieure à la moitié de la longueur d'onde correspondant à la fréquence centrale de ladite bande d'émission et comporte :
- des moyens de déplacement dans ladite zone,
- des moyens d'acquisition, configurés pour acquérir des mesures de puissance électromagnétique reçue par ledit dispositif récepteur en au moins un emplacement de ladite partie, les mesures associées à un emplacement étant respectivement acquises dans des sous-bandes de ladite bande de travail,
- un module de comparaison, configuré pour comparer les mesures associées audit au moins un emplacement avec un seuil déterminé,
- un module de détermination, configuré pour déterminer, lorsqu'au moins une desdites mesures est inférieure audit seuil, que l'emplacement associé auxdites mesures est un emplacement pour la réception du signal ambiant destiné à être rétrodiffusé.

Dans des modes particuliers de réalisation, ledit dispositif récepteur comportant un module de pilotage, configuré pour commander, lorsqu'au moins un emplacement pour la réception a été déterminé, un déplacement du dispositif récepteur dans la zone, de sorte à atteindre une position fixe fonction dudit au moins un emplacement déterminé.

Selon un sixième aspect, l'invention concerne un système de communication comportant au moins un dispositif récepteur selon l'invention et au moins un dispositif transmetteur.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement une carte de distribution de puissance électromagnétique rayonnée par une source correspondant à une tour de télévision ;
[Fig. 2] la figure 2 représente schématiquement, dans son environnement et dans un mode particulier de réalisation, un système 10 de communication selon l'invention ;
[Fig. 3] la figure 3 représente schématiquement une vue partielle d'un exemple de réalisation d'un dispositif transmetteur D_TX du système de communication selon l'invention ;
[Fig. 4] la figure 4 représente, sous forme d'ordinogramme, les principales étapes d'un procédé de détermination d'au moins un emplacement pour la réception d'un signal ambiant rétrodiffusé selon l'invention ;
[Fig. 5] la figure 5 représente schématiquement un mode préféré de mise en oeuvre du procédé de détermination de la figure 4 ;
[Fig. 6] la figure 6 représente, sous forme d'ordinogramme, les principales étapes d'un procédé de communication selon l'invention.

### Description des modes de réalisation

La figure 2 représente schématiquement, dans son environnement et dans un mode particulier de réalisation, un système 10 de communication selon l'invention.

Le système 10 de communication comporte un dispositif transmetteur D_TX qui reste fixe, ainsi qu'un dispositif récepteur D_RX.

Dans la suite de la description, et tel qu'illustré par le mode de réalisation de la figure 2, on considère de manière non limitative que le système 10 de communication comprend un seul dispositif transmetteur D_TX et un seul dispositif récepteur D_RX. Il convient toutefois de préciser que l'invention est également applicable à un système de communication comprenant une pluralité de dispositifs transmetteurs et / ou une pluralité de dispositifs émetteurs.

Le fonctionnement du système 10 de communication est basé sur la technologie de rétrodiffusion ambiante. Cette technologie consiste, de manière connue en soi, en la rétrodiffusion, par le dispositif transmetteur D_TX et vers le dispositif récepteur D_RX, d'un signal radio ambiant émis dans une bande fréquentielle déterminée, dite « bande d'émission ». Dit autrement, pour communiquer avec le dispositif récepteur D_RX, le dispositif transmetteur D_TX exploite ledit signal ambiant pour envoyer des données vers ledit dispositif récepteur D_RX. Plus particulièrement, le dispositif transmetteur D_TX réfléchit le signal ambiant vers le dispositif récepteur D_RX, éventuellement en le modulant. Le signal ainsi réfléchi est dit « signal rétrodiffusé », et est destiné à être décodé par le dispositif récepteur D_RX.

Les aspects concernant l'émission de données par rétrodiffusion à destination du dispositif récepteur D_RX, ainsi que ceux concernant les techniques de décodage mises en oeuvre par ce dernier, sont connus de l'homme du métier et sortent du cadre de la présente invention. Par conséquent, ils ne sont pas détaillés ici plus avant.

Le signal ambiant correspond à un signal radioélectrique émis, de manière permanente ou bien de manière récurrente, par au moins une source 20. Pour la suite de la description, et tel qu'illustré par la figure 2, on considère de manière nullement limitative le cas où le signal ambiant n'est émis que par une seule source. Aucune limitation n'est toutefois attachée au nombre de sources pouvant être considérée dans le cadre de la présente invention, dès lors que ces sources émettent dans des bandes respectives dont l'intersection n'est pas vide et qui en outre intersecte une bande fréquentielle associée au dispositif transmetteur D_TX, comme cela décrit ci-après plus en détails.

Par « signal radioélectrique », on fait référence ici à une onde électromagnétique se propageant par des moyens non filaires, dont les fréquences sont comprises dans le spectre traditionnel des ondes radioélectriques (quelques hertz à plusieurs centaines de gigahertz).

La suite de la description vise plus spécifiquement, mais de manière nullement limitative, un signal ambiant UHF (acronyme de l'expression « Ultra Hautes Fréquences ») émis par une tour de télévision dans la bande d'émission [583 MHz, 590 MHz].

Il convient toutefois de préciser que l'invention reste applicable à tout type de signal radioélectrique, comme par exemple un signal de téléphonie mobile (par exemple 3G, 4G, 5G), un signal Wi-Fi, un signal WiMax, un signal DVB-T, etc.

Par ailleurs, aucune limitation n'est attachée aux formes structurelles pouvant être prises respectivement par la source 20 et le dispositif récepteur D_RX. A titre d'exemples nullement limitatifs, les configurations suivantes sont envisageables (en fonction, bien entendu, de la bande d'émission considérée) :
- la source 20 est une station de base, et le dispositif récepteur D_RX est un smartphone,
- la source 20 est un smartphone, et le dispositif récepteur D_RX est une station de base,
- la source 20 est un smartphone, et le dispositif récepteur D_RX est également un smartphone,
- la source 20 est une passerelle domestique (encore dite « box Internet ») émettant un signal Wi-Fi, et le dispositif récepteur D_RX est un smartphone.

Les ondes véhiculées par les signaux considérés dans la présente invention sont représentées de manière conceptuelle par des flèches ondulées dans la figure 2. Plus particulièrement, les flèches F_1 et F_2 représentent des ondes du signal ambiant émis par la source 20. Les ondes représentées par la flèche F_1 sont rétrodiffusées par le dispositif transmetteur D_TX, et les ondes du signal rétrodiffusé sont ici représentées par la flèche F_3. Les ondes représentées par la flèche F_2 ne sont quant à elles pas rétrodiffusées et parviennent directement au dispositif récepteur D_RX. On note par ailleurs que seules les ondes représentées par la flèche F_3 transportent les données que le dispositif récepteur D_RX est destiné à décoder.

Il convient de noter que la figure 2 est donnée à titre purement illustratif. Ainsi, elle ne comporte par exemple aucun élément susceptible de réfléchir ou diffracter les ondes du signal ambiant. En ce sens, la figure 2 se veut être une version simplifiée de l'environnement dans lequel se trouvent les dispositifs transmetteur D_TX et récepteur D_RX. Il faut néanmoins garder à l'esprit que cet environnement est en général de configuration complexe et comporte, en pratique, des éléments (murs, arbres, sol, etc.) aptes à générer de telles réflexions et diffractions.

Comme mentionné auparavant, le dispositif transmetteur D_TX et le dispositif récepteur D_RX sont respectivement configurés afin de communiquer entre eux par rétrodiffusion ambiante.

La figure 3 représente schématiquement une vue partielle d'un exemple de réalisation du dispositif transmetteur D_TX de la figure 2. La configuration d'un tel dispositif transmetteur D_TX est connue de l'homme du métier.

Tel qu'illustré par la figure 3, le dispositif transmetteur D_TX est équipé d'une antenne 111 configurée, de manière connue en soi, pour recevoir le signal ambiant mais aussi le rétrodiffuser vers le dispositif récepteur D_RX. Il convient de noter qu'aucune limitation n'est attachée au nombre d'antennes pouvant équiper le dispositif transmetteur D_TX.

Dans l'exemple de la figure 3, ladite antenne est construite de sorte à présenter une plus grande dimension sensiblement égale à la moitié de la longueur d'onde associée à une fréquence F_C comprise dans la bande d'émission. Plus particulièrement, la fréquence F_C considérée ici est la fréquence centrale de la bande d'émission [583 MHz, 590 MHz], soit 586,5 MHz. Ainsi, ladite plus grande dimension de l'antenne 111 est sensiblement égale à 25 cm.

En pratique, le dispositif transmetteur D_TX est associé à une bande fréquentielle, dite « bande d'influence », qui correspond à la bande fréquentielle dans laquelle l'antenne 111 est apte à recevoir / rétrodiffuser des signaux. Ainsi, dans l'exemple donné ci-avant en référence à la figure 3, ladite bande d'influence correspond à un intervalle de fréquences centré sur ladite fréquence F_C, et dont l'amplitude est égale à une fréquence d'échantillonnage F_E appliquée par un convertisseur analogique / numérique équipant le dispositif transmetteur D_TX aux signaux susceptibles d'être reçus. Dit encore autrement, ladite bande d'influence est égale à [F_C - F_E / 2, F_C + F_E/2].

Par exemple, ladite fréquence d'échantillonnage est égale à 1 MHz, et la bande d'influence est alors égale à [585,5 MHz, 587,5 MHz]. On note alors que la bande d'influence est incluse dans la bande d'émission associée à la source 20. En raison de cette inclusion, ladite bande d'influence est qualifiée de « bande de travail » B_T. Par « bande de travail », on fait référence ici au fait que le dispositif transmetteur D_TX est compatible avec la source 20, à savoir donc que la rétrodiffusion peut être effectuée pour toute fréquence comprise dans ladite bande de travail B_T.

Rien n'exclut cependant de considérer d'autres valeurs pour les fréquences F_C et F_E. Il apparait néanmoins de manière évidente que pour que le dispositif émetteur D_TX soit en mesure de rétrodiffuser le signal ambiant, il convient que ladite bande d'influence soit d'intersection non vide avec ladite bande d'émission, la bande de travail B_T correspondant dès lors à cette intersection. Ainsi, si le dispositif transmetteur D_TX est configuré de sorte à être associé à une bande d'influence contenant la bande d'émission, alors la bande de travail B_T dudit dispositif émetteur D_TX est définie comme étant égale à ladite bande d'émission.

Le dispositif transmetteur D_TX est également associé à des états de fonctionnement, à savoir un état dit de « rétrodiffusion » (le dispositif transmetteur D_TX rétrodiffuse le signal ambiant) ainsi qu'un état contraire dit de « non-rétrodiffusion » (le dispositif transmetteur D_TX est transparent au signal ambiant). Ces états correspondent à des configurations dans lesquelles ladite antenne 111 est connectée à des impédances distinctes. Il s'agit typiquement d'une impédance positive, voire nulle, dans le cas d'un état de rétrodiffusion, et à l'inverse une impédance théoriquement infinie dans le cas de l'état de non-rétrodiffusion.

Par exemple, et tel qu'illustré par la figure 3, le dispositif émetteur comporte deux commutateurs 112, 113 configurés de sorte à pouvoir relier à l'antenne 111, en fonction de leurs positions respectives, une impédance I_1, par exemple égale à 0 Ohms, ou bien encore égale à R Ohms où R est une valeur strictement positive finie. Lorsqu'au moins un des commutateurs 112, 113 n'est pas relié à l'impédance I_1, l'antenne 111 est dans une configuration dite de « circuit ouvert » correspondant audit état de non-rétrodiffusion.

En outre, le dispositif transmetteur D_TX est configuré pour effectuer, à partir du signal ambiant reçu via son antenne 111 et lorsqu'il est dans l'état de rétrodiffusion, des traitements visant à rétrodiffuser ledit signal ambiant, en mettant en oeuvre un procédé de rétrodiffusion.

A cet effet, le dispositif transmetteur D_TX comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en le procédé de rétrodiffusion.

Alternativement ou en complément, le dispositif transmetteur D_TX comporte également un ou des circuits logiques programmables, de type FPGA, PLD, etc., et / ou circuits intégrés spécialisés (ASIC), et / ou un ensemble de composants électroniques discrets, etc. adaptés à mettre en oeuvre le procédé de rétrodiffusion.

En d'autres termes, le dispositif transmetteur D_TX comporte un ensemble de moyens configurés de façon logicielle (programme d'ordinateur spécifique) et / ou matérielle (FPGA, PLD, ASIC, etc.) pour mettre en oeuvre le procédé de rétrodiffusion.

Les aspects spécifiquement liés à la mise en oeuvre du procédé de rétrodiffusion (traitement du signal ambiant, modulation, etc.) sortent du cadre de la présente invention, et sont en outre connus de l'homme du métier. Par conséquent, ils ne sont pas détaillés ici plus avant.

Le dispositif récepteur D_RX, quant à lui, est configuré pour :
- recevoir le signal ambiant émis par la source 20, dont notamment les éventuelles réflexions et diffractions subies par les ondes de ce signal en raison d'éléments placés dans l'environnement dans lequel se trouvent les dispositifs transmetteur D_TX et récepteur D_RX,
- recevoir le signal rétrodiffusé provenant du dispositif transmetteur D_TX.

A cet effet, ledit dispositif récepteur D_RX comporte au moins une antenne de réception. Il convient de noter qu'aucune limitation n'est attachée au nombre d'antennes pouvant équiper le dispositif récepteur D_RX.

Le dispositif récepteur D_RX est également associé à une zone Z_T déterminée en fonction de ladite bande d'émission. Une telle zone Z_T correspond à un espace géographique au sein duquel le dispositif récepteur D_RX peut se déplacer à partir d'un emplacement initial qu'il occupe, pour trouver un emplacement en lequel la distribution de puissance rayonnée par la source 20 est localement minimale.

Ladite zone Z_T est par exemple définie au moment de la conception du dispositif récepteur D_RX.

Alternativement, ladite zone Z_T est définie alors que le dispositif récepteur D_RX occupe déjà une position in situ, en fonction d'un type de source dont on souhaite rétrodiffuser le signal ambiant. A cet effet, un message comportant une information de définition de ladite zone Z_T peut être transmis, par exemple par un opérateur, au dispositif récepteur D_RX.

Ladite zone Z_T présente au moins une dimension sensiblement égale à la moitié de la longueur d'onde associée à une fréquence comprise dans la bande d'émission, de préférence une fréquence correspondant à la fréquence centrale de ladite bande d'émission. Le fait de considérer une telle valeur pour ladite au moins une dimension résulte du fait que les minima locaux de la distribution de puissance rayonnée par la source 20 (comme par exemple ceux associés aux zones Z_5 et Z_6 dans la figure 1) sont en moyenne deux à deux séparés d'une distance égale à la moitié de la longueur d'onde associée à la fréquence centrale de la bande d'émission. On comprend donc ainsi que le fait de considérer une zone Z_T présentant au moins une telle dimension permet avantageusement, au dispositif récepteur D_RX, de maximiser la probabilité de trouver un minimum local au cours d'un déplacement dans ladite zone Z_T.

A titre d'exemple nullement limitatif, une telle zone Z_T est illustrée sur la figure 1. Dans cet exemple, la fréquence considérée dans la bande d'émission est ladite fréquence F_C, de sorte que ladite au moins une dimension de la zone Z_T est égale à 25 cm. Plus particulièrement, la zone Z_T correspond ici à un carré dont la longueur de côté est égale à 25 cm. En outre, le dispositif récepteur D_RX occupe un emplacement initial correspondant au centre de ce carré. On note que cet emplacement initial est déterminé indépendamment de toute connaissance a priori de la distribution de puissance rayonnée par la source 20.

Rien n'exclut cependant, suivant d'autres exemples non détaillés ici, de considérer une zone de forme différente d'un carré, ainsi que présentant une ou plusieurs (voire toutes) dimensions inférieures ou supérieures à la moitié de la longueur d'onde associée à une fréquence comprise dans la bande d'émission. En outre, aucune limitation n'est attachée à l'emplacement initial occupé par le dispositif récepteur D_RX au sein de la zone Z_T. Par exemple, dans le cas où la zone Z_T est un carré, ledit emplacement initial peut correspondre à un coin de ce carré.

Le dispositif récepteur D_RX comporte en outre des moyens de déplacement (non représentés sur les figures) dans ladite zone Z_T, et plus largement dans tout l'environnement dans lequel se trouvent les dispositifs transmetteur D_TX et récepteur D_RX.

Par exemple, lesdits moyens de déplacement comportent des moyens d'entrainement, comme par exemple au moins un moteur électrique, ainsi que des moyens de guidage, comme par exemple des roues. Rien n'exclut cependant de considérer d'autres moyens d'entrainement, comme par exemple un moteur thermique, ainsi que d'autres moyens de guidage, comme par exemple des chenilles.

Préférentiellement, le dispositif récepteur D_RX prend la forme d'un robot comportant un moteur électrique et des roues. Par exemple, un tel robot est destiné à évoluer dans un hangar au sein duquel sont stockées des marchandises, ces marchandises étant susceptibles d'être extraites du hangar, une par une, afin d'être expédiées suite à des commandes de consommateurs. Ledit dispositif transmetteur D_TX, par exemple de type ordinateur, est apte à tenir à jour l'inventaire du stock de marchandises dans le hangar. Dès lors, les données rétrodiffusées vers le dispositif récepteur D_RX peuvent être représentatives, à un instant donné, d'une partie dudit inventaire, cette partie concernant une zone du hangar dans lequel le dispositif récepteur D_RX se déplace.

Le dispositif récepteur D_RX comporte également des moyens d'acquisition configurés pour acquérir, en au moins un emplacement de ladite zone Z_T, des mesures de puissance électromagnétique reçue par ledit dispositif récepteur D_RX, lesdites mesures étant respectivement acquises dans des sous-bandes de ladite bande de travail B_T.

De manière conventionnelle, lesdits moyens d'acquisition comportent une chaine d'acquisition connectée à un élément sensible configuré pour fournir un signal électrique analogique représentatif de la puissance électromagnétique mesurée. Dans le présent exemple de réalisation, ledit élément sensible correspond à une antenne de réception équipant le dispositif récepteur D_RX.

Ladite chaine d'acquisition comporte par exemple une carte d'acquisition configurée pour conditionner ledit signal électrique. Le conditionnement mis en oeuvre par la carte d'acquisition comporte par exemple, de manière connue en soi, une amplification et / ou un filtrage et / ou une conversion courant-puissance. D'une manière générale, la configuration de tels moyens d'acquisition est bien connue de l'homme du métier, et n'est donc pas détaillée ici plus avant.

Il est à noter que les moyens d'acquisition sont configurés pour réaliser l'acquisition de mesures de puissance aussi bien dans l'état de non-rétrodiffusion que dans l'état de rétrodiffusion du dispositif transmetteur D_TX.

Dans un mode particulier de réalisation, le dispositif transmetteur D_TX est associé à un schéma déterminé de fonctionnement dans le temps correspondant à des alternances entre l'état de non-rétrodiffusion et l'état de rétrodiffusion. Par exemple, des durées déterminées sont allouées respectivement à l'état de non-rétrodiffusion et à l'état de rétrodiffusion, le dispositif transmetteur D_TX fonctionnant suivant lesdits états en fonction desdites durées allouées. Il convient de noter qu'un tel schéma de fonctionnement est par exemple défini dans une norme de télécommunication.

Par ailleurs, dans ce mode particulier de réalisation, le dispositif récepteur D_RX a connaissance dudit schéma de fonctionnement. Cette connaissance provient par exemple d'une ou plusieurs données représentatives dudit schéma de fonctionnement et mémorisées par le dispositif récepteur D_RX. Ces données sont par exemple transmises au dispositif récepteur D_RX par un opérateur ou bien encore par le dispositif transmetteur D_TX lui-même.

Rien n'exclut toutefois de considérer que le dispositif transmetteur D_TX ne soit associé à aucun schéma de fonctionnement déterminé. Par exemple, le passage de l'état de rétrodiffusion à l'état de non-rétrodiffusion (et vice versa) est réalisé de manière assistée par un opérateur, en fonction de besoins spécifiques de communication entre les dispositifs. A nouveau, la connaissance de l'état (rétrodiffusion ou non-rétrodiffusion) dudit dispositif transmetteur D_TX, par le dispositif récepteur D_RX, peut provenir d'un message transmis audit dispositif récepteur D_RX, ce message comportant des données représentatives de l'état. Par exemple, ce message est transmis par un opérateur ou bien par le dispositif transmetteur D_TX lui-même.

En tout état de cause, et selon l'invention, le dispositif récepteur D_RX est apte à réaliser des traitements (par exemple un procédé de détermination tel que décrit ultérieurement) lorsque le dispositif transmetteur D_TX est dans l'état de non-rétrodiffusion. Autrement dit, le dispositif récepteur D_RX peut exécuter de tels traitements en se synchronisant avec des périodes au cours desquelles le dispositif transmetteur D_TX est dans l'état de non-rétrodiffusion.

Le dispositif récepteur D_RX est également configuré pour effectuer, sur la base de mesures de puissance acquises en au moins un emplacement, des traitements visant à déterminer au moins un emplacement pour la réception du signal rétrodiffusé, en mettant en oeuvre tout ou partie des étapes d'un procédé de détermination dudit au moins un emplacement.

A cet effet, le dispositif récepteur D_RX comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en oeuvre au moins une partie des étapes du procédé de détermination.

Alternativement ou en complément, le dispositif récepteur D_RX comporte également un ou des circuits logiques programmables, de type FPGA, PLD, etc., et / ou circuits intégrés spécialisés (ASIC), et / ou un ensemble de composants électroniques discrets, etc. adaptés à mettre en oeuvre tout ou partie des étapes du procédé de détermination.

En d'autres termes, le dispositif récepteur D_RX comporte un ensemble de moyens configurés de façon logicielle (programme d'ordinateur spécifique) et / ou matérielle (FPGA, PLD, ASIC, etc.) pour mettre en oeuvre tout ou partie des étapes du procédé de détermination.

Outre le fait de permettre la détermination d'au moins un emplacement pour la réception, lesdits moyens configurés de façon logicielle et / ou matérielle permettent également de piloter le déplacement du dispositif récepteur D_RX.

A cet effet, ces moyens comportent par exemple un module de pilotage (non représenté sur les figures) configuré pour générer des commandes de déplacement du dispositif récepteur D_RX. De telles commandes peuvent être générées indépendamment de l'état (rétrodiffusion ou non-rétrodiffusion) du dispositif transmetteur D_TX.

Par exemple, lesdites commandes sont générées sans assistance. Autrement dit, le dispositif récepteur D_RX est apte à se déplacer dans la zone Z_T de manière autonome, c'est-à-dire sans intervention d'un opérateur.

Alternativement, le pilotage du dispositif récepteur D_RX est réalisé de manière assistée par un opérateur qui génère à distance des signaux de commande, ces signaux de commande étant ensuite transmis audit dispositif récepteur D_RX qui se déplace en fonction des données véhiculées dans ces signaux. A cet effet, le dispositif récepteur D_RX comporte par exemple des moyens de communication pour la réception desdits signaux de commande, lesdits signaux étant ensuite traités par le module de pilotage. Ces moyens de communication s'appuient, de manière connue en soi, sur une interface de communication apte à l'échange de données entre ledit opérateur et ledit dispositif récepteur D_RX. Aucune limitation n'est attachée à la nature de cette interface de communication, qui peut être filaire ou non filaire, de sorte à permettre l'échange de données selon tout protocole connu de l'homme de l'art (Ethernet, Wifi, Bluetooth, 3G, 4G, 5G, etc.). Rien n'exclut non plus de considérer, selon un autre exemple, que lesdits signaux de commande soient reçus par une antenne de réception du dispositif récepteur D_RX.

Pour la suite de la description, on considère de manière nullement limitative que le fonctionnement du dispositif récepteur D_RX est assuré par une énergie électrique que ce dernier est en mesure de stocker.

Par exemple, ladite énergie électrique est contenue dans une batterie électrique intégrée audit dispositif récepteur D_RX, et pouvant être par exemple rechargée au moyen de panneaux solaires équipant ledit dispositif récepteur D_RX, ou bien par effet capacitif, de sorte que le dispositif récepteur D_RX est énergétiquement autonome. Alternativement, le rechargement de ladite batterie s'effectue via un raccordement au réseau électrique domestique.

Rien n'exclut cependant de considérer d'autres types d'énergie, comme par exemple une énergie fossile, notamment dans le cas où le dispositif récepteur D_RX est équipé d'un moteur thermique. Enfin, rien n'exclut non plus de considérer un mix énergétique (électrique et thermique).

Autrement dit, et d'une manière générale, aucune limitation n'est attachée à l'énergie considérée pour le fonctionnement du dispositif récepteur D_RX, ni même à la manière dont cette énergie est obtenue par ce dernier.

En outre, et comme mentionné ci-avant, le dispositif récepteur D_RX est configuré pour effectuer des traitements visant à décoder le signal rétrodiffusé, en mettant en oeuvre un procédé de décodage.

A cet effet, et selon des caractéristiques identiques à celles décrites ci-avant dans le cas des moyens de mise en oeuvre du procédé de détermination, le dispositif récepteur D_RX comporte également un ensemble de moyens configurés de façon logicielle (programme d'ordinateur spécifique) et / ou matérielle (FPGA, PLD, ASIC, etc.) pour mettre en oeuvre ledit procédé de décodage.

Les aspects spécifiquement liés à la mise en oeuvre du procédé de décodage sortent du cadre de la présente invention, et sont en outre connus de l'homme du métier. Par conséquent, ils ne sont pas détaillés ici plus avant.

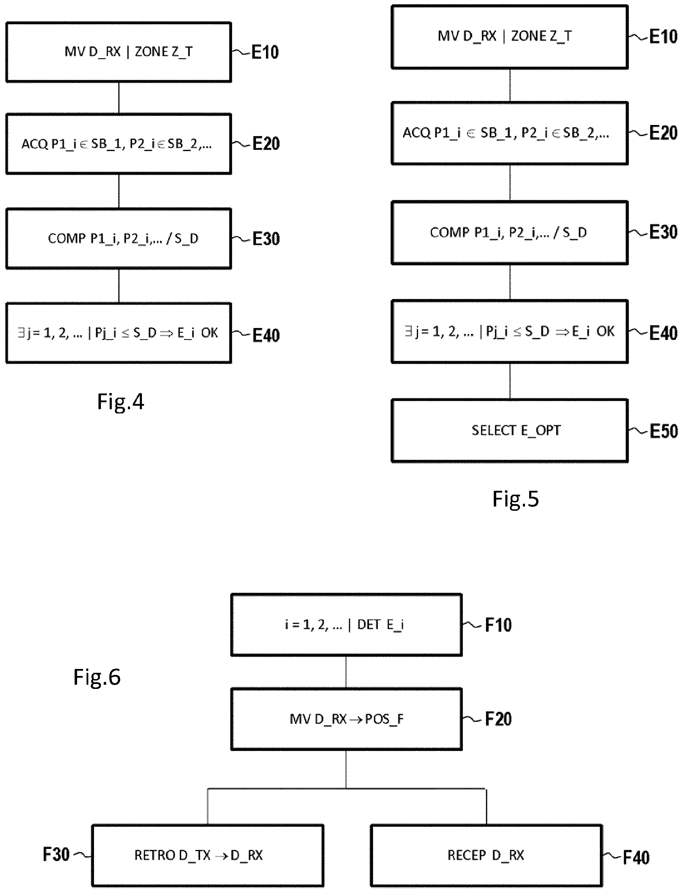

La figure 4 représente, sous forme d'ordinogramme, les principales étapes du procédé de détermination d'au moins un emplacement selon l'invention.

Ledit procédé de détermination est mis en oeuvre par le dispositif récepteur D_RX lorsque le dispositif transmetteur D_TX est dans l'état de non-rétrodiffusion.

On rappelle ici que l'état de non rétrodiffusion correspond à une configuration dans laquelle l'antenne 111 du dispositif transmetteur D_TX est dans la configuration de circuit ouvert. Aussi, pour la mise en oeuvre du procédé de détermination, aucune limitation n'est attachée quant au fait que le dispositif transmetteur D_TX soit en fonctionnement ou non (i.e. l'énergie nécessaire au fonctionnement du dispositif transmetteur D_TX soit en cours d'utilisation ou non), dès lors qu'il est dans l'état de non-rétrodiffusion.

Ledit procédé de détermination comporte plusieurs étapes. Dans son principe général, il consiste à réaliser des mesures de puissance électromagnétique en au moins un emplacement de la zone Z_T lorsque le dispositif récepteur D_RX réalise un parcours, afin de pouvoir localiser un emplacement en lequel la puissance électromagnétique générée par la source 20 est suffisamment faible, limitant ainsi la présence d'interférences susceptibles de faire échouer le décodage d'un signal rétrodiffusé par le dispositif transmetteur D_TX.

Pour la suite de la description, et à titre purement illustratif, on considère que la distribution de puissance rayonnée par la source 20 au moment où le procédé de détermination est mis en oeuvre est conforme à la distribution représentée par la figure 1. On considère également que la zone Z_T associée au dispositif récepteur D_RX correspond à celle indiquée dans la figure 1.

On considère en outre que le dispositif récepteur D_RX occupe, avant la mise en oeuvre dudit procédé de détermination, un emplacement initial correspondant au centre du carré formant la zone Z_T. Il faut toutefois noter qu'aucune limitation n'est attachée à la localisation dudit emplacement initial au sein, ou bien le long de la frontière, de ladite zone Z_T.

Tel qu'illustré par la figure 4, ledit procédé de détermination comporte une étape E10 de parcours du dispositif récepteur D_RX dans au moins une partie de la zone Z_T.

Un tel parcours du dispositif récepteur D_RX permet à ce dernier de balayer au moins en partie la zone Z_T dans l'objectif d'y découvrir au moins un emplacement en lequel la puissance rayonnée par la source 20 est suffisamment faible pour que le dispositif récepteur D_RX puisse décoder le signal qui sera rétrodiffusé.

Par « parcours », on fait référence ici à une phase d'exploration, cette phase pouvant comprendre un déplacement continu (c'est-à-dire sans arrêt au sein de ladite partie) entre des emplacements respectivement initial et final en lesquels le dispositif récepteur D_RX est fixe, ou bien encore pouvant être réalisé de manière fractionnée (c'est-à-dire avec un ou plusieurs arrêts intermédiaires au sein de ladite partie avant d'atteindre un emplacement final).

Dans un mode particulier de mise en oeuvre, le parcours du dispositif récepteur D_RX est réalisé de manière autonome, c'est-à-dire sans assistance externe. Par exemple, ledit dispositif récepteur D_RX est configuré pour analyser l'environnement dans lequel il se trouve, afin de détecter d'éventuels obstacles qu'il peut dès lors contourner. Une telle détection est typiquement mise en oeuvre grâce à des moyens d'imagerie (par exemple une caméra) équipant le dispositif récepteur D_RX, ainsi que grâce à des traitements mis en oeuvre par ledit récepteur D_RX et visant à analyser des images obtenues avec lesdits moyens d'imagerie. De tels traitements sont bien connus de l'homme du métier, et ne sont donc pas détaillés ici plus avant.

Dans un autre mode particulier de mise en oeuvre, le parcours du dispositif récepteur D_RX est réalisé de manière assistée, par exemple par un opérateur apte à contrôler à distance les mouvements du dispositif récepteur D_RX.

Quel que soit le mode de mise en oeuvre considéré (autonome ou assisté), le parcours du dispositif récepteur D_RX peut s'effectuer selon une trajectoire déterminée, comme par exemple une spirale, une ligne en créneaux, etc.

Alternativement, le déplacement du dispositif récepteur D_RX peut s'effectuer de manière non déterministe.

De manière générale, aucune limitation n'est attachée à la trajectoire suivie par le dispositif récepteur D_RX.

Par ailleurs, ladite partie de la zone Z_T est par exemple configurée de sorte à comprendre l'emplacement initial du dispositif récepteur D_RX.

A titre illustratif, et en référence à la figure 1, ladite partie correspond à une moitié (par exemple la moitié droite) du carré formé par la zone Z_T. Ainsi, l'emplacement initial appartient à la frontière de ladite partie.

Alternativement, ladite partie ne comprend pas l'emplacement initial, de sorte que le dispositif récepteur D_RX réalise un déplacement préalable afin de rejoindre ladite partie qui est ensuite parcourue.

De manière générale, aucune limitation n'est attachée à la forme présentée par ladite partie de la zone Z_T. De plus, le parcours du dispositif récepteur D_RX peut être réalisé pendant une durée déterminée, par exemple paramétrable, de sorte que la forme de ladite partie peut dépendre de cette durée déterminée.

Dans un mode particulier de mise en oeuvre, le déplacement du dispositif récepteur D_RX est réalisé dans toute la zone Z_T. Procéder de cette manière permet de maximiser la probabilité de trouver un minimum local de puissance lors du parcours du dispositif récepteur D_RX.

Le procédé de détermination comporte également, au cours du parcours du dispositif récepteur D_RX, une étape E20 d'acquisition de mesures de puissance électromagnétique P1_i, P2_i,...reçue par ledit dispositif récepteur D_RX en au moins un emplacement E_i de ladite partie. Comme mentionné auparavant, lesdites mesures P1_i, P2_i,...sont acquises dans la bande de travail B_T associé au dispositif transmetteur D_TX.

Plus précisément, lesdites mesures P1_i, P2_i,...associées à l'emplacement E_i sont respectivement acquises dans des sous-bandes fréquentielles SB_1, SB_2,...de ladite bande de travail B_T. Autrement dit, pour un emplacement E_i considéré, chaque mesure acquise est associée à une telle sous-bande fréquentielle (P1_i associée à SB_1, P2_i associée à SB_2, etc.). En résumé, pour un emplacement E_i considéré, la mesure P1_i est acquise dans la sous-bande SB_1, la mesure P2_i est acquise dans la sous-bande SB_2, etc.

Le fait de considérer plusieurs sous-bandes permet avantageusement de discriminer finement les fréquences de la bande de travail B_T en fonction des niveaux d'interférences respectivement associés à chacune d'elles. En effet, il est connu que le niveau de puissance reçu en un emplacement, et donc in fine le niveau d'interférences en cet emplacement, varie en fonction de la fréquence considérée pour acquérir des mesures.

Il importe de noter que si plusieurs emplacements E_i sont considérés (i.e. des acquisitions sont réalisées en plusieurs emplacements E_i lors du parcours du dispositif récepteur D_RX), lesdites sous-bandes SB_1, SB_2,...ne varient pas d'un emplacement à l'autre. Par exemple, si deux emplacements E_1 et E_2 sont considérés, des mesures sont acquises dans lesdites sous-bandes SB_1, SB_2,...en chacun desdits emplacements E_1 et E_2.

Préférentiellement, lesdites sous-bandes SB_1, SB_2...forment une partition de la bande de travail B_T. De cette manière, les mesures acquises en un emplacement E_i donné sont associées à des sous-bandes distinctes entre elles. De telles dispositions permettent d'optimiser la discrimination des mesures entre elles, en vue de la détermination d'un emplacement de réception, comme cela est décrit ultérieurement.

Par exemple, la largeur d'une sous-bande SB_i est égale à 100 kHz. Aucune limitation n'est attachée à la largeur pouvant être considérée pour une sous-bande SB_i. En outre, une telle largeur peut être prescrite par une norme de télécommunication.

Il est à noter que le choix consistant à considérer des sous-bandes formant une partition de la bande de travail B_T ne constitue toutefois qu'une variante d'implémentation de l'invention. Ainsi, rien n'exclut de considérer des sous-bandes qui se recouvrent partiellement.

Les acquisitions sont préférentiellement réalisées à l'arrêt (phase d'exploration fractionnée). Autrement dit, lors de son parcours, le dispositif récepteur D_RX marque des arrêts dès lors qu'il souhaite acquérir, en un emplacement E_i, des mesures de puissance électromagnétique.

Rien n'exclut toutefois de considérer que lesdites mesures P1_i, P2_i,...soient acquises alors que le dispositif récepteur D_RX est en mouvement.

Dans un exemple particulier de mise en oeuvre, si une pluralité d'emplacements est considérée lors de l'étape E20 d'acquisition, les mesures sont acquises selon un pas de temps déterminé, par exemple paramétrable, entre chaque emplacement dans ladite partie de la zone Z_T. Pour ce faire, le dispositif récepteur D_RX se déplace par exemple à vitesse constante.

Selon un autre exemple, ou bien en complément du précédent dans lequel un pas de temps déterminé est considéré, et lorsque plusieurs emplacements sont considérés lors de l'étape E20, les mesures sont acquises selon un pas de distance déterminé, par exemple paramétrable, entre chaque emplacement dans ladite partie de la zone Z_T.

Le nombre d'emplacements E_i considérés correspond par exemple à un nombre déterminé, par exemple paramétrable. Il convient cependant de noter qu'aucune limitation n'est attachée au nombre d'emplacements E_i pouvant être considéré. Ainsi, l'invention reste applicable dans la situation où un seul emplacement est considéré.

En outre, rien n'exclut de considérer des mesures de puissance acquises en l'emplacement initial lorsque le dispositif récepteur D_RX est à l'arrêt.

Pour la suite de la description, on considère de manière nullement limitative que des mesures sont acquises en une pluralité d'emplacements E_1, E_2,...dans la partie de la zone Z_T.

Le procédé de détermination comporte également une étape E30 de comparaison des mesures respectivement associées auxdits emplacements avec un seuil déterminé S_D, par exemple paramétrable.

Cette étape E30 de comparaison est ici mise en oeuvre par un module de comparaison équipant le dispositif récepteur D_RX. Il est à noter que bien que cette étape E30 est ici décrite comme étant mise en oeuvre lorsque ledit dispositif transmetteur D_TX est dans l'état de non-rétrodiffusion, rien n'exclut de considérer, suivant un exemple particulier de réalisation, que ledit module de comparaison soit également apte à effectuer une telle comparaison pendant un état de rétrodiffusion.

Le seuil S_D considéré ici pour la comparaison est typiquement déterminé en fonction d'un taux d'erreur de décodage déterminé, par exemple paramétrable, ainsi que d'un bruit de réception considéré comme admissible côté dispositif récepteur D_RX. D'une manière générale, l'homme du métier sait fixer un seuil S_D à partir duquel un emplacement peut être considéré pour la réception.

Ainsi, en fixant un tel seuil S_D, l'objectif est d'éviter qu'un emplacement en lequel il existe de nombreuses interférences, du moins suffisamment pour que le taux d'erreur de décodage dépasse un seuil donné, soit considéré comme un emplacement valide pour la réception du signal rétrodiffusé.

Par exemple, ledit seuil S_D est choisi suffisamment faible, par exemple dans l'intervalle [-6 dB, -2dB], plus particulièrement dans l'intervalle [-6 dB, -4 dB].

La comparaison effectuée au cours de l'étape E30 est par exemple mise en oeuvre à chaque fois qu'une mesure de puissance est acquise dans une sous-bande SB_i.

Alternativement, ladite comparaison est mise en oeuvre, pour chaque emplacement E_i, lorsque toutes les mesures P1_i, P2_i,...associées audit emplacement E_i ont été acquises, et avant que d'autres mesures en un autre emplacement ne soient acquises.

Alternativement, ladite comparaison est mise en oeuvre une fois qu'une durée déterminée de parcours est écoulée, par exemple paramétrable, et / ou lorsqu'un nombre déterminé, par exemple paramétrable, d'emplacements E_i a été atteint lors du parcours, lesdites mesures étant dans ce cas mémorisées par le dispositif récepteur D_RX lors de son parcours.

Selon encore une autre alternative, ou bien en complément des alternatives précédentes, ladite comparaison est mise en oeuvre une fois que toute la partie de la zone Z_T, voire toute ladite zone Z_T le cas échéant, a été parcourue.

Dès lors, et au cours d'une étape E40 du procédé de détermination, un emplacement E_i, parmi les emplacements en lesquels des mesures ont été acquises est déterminé comme étant un emplacement de réception si au moins une des mesures associée à cet emplacement E_i est inférieure audit seuil S_D. Dit encore autrement, E_i est déterminé comme étant un emplacement de réception, s'il existe au moins un indice j tel que Pj_i est inférieure à S_D.

Cette étape E40 de détermination est ici mise en oeuvre par un module de détermination équipant le dispositif récepteur D_RX. Il est à noter que bien que cette étape E40 est ici décrite comme étant mise en oeuvre lorsque ledit dispositif transmetteur D_TX est dans l'état de non-rétrodiffusion, rien n'exclut de considérer, suivant un exemple particulier de réalisation, que ledit module de détermination soit également apte à effectuer une telle détermination pendant un état de rétrodiffusion.

Il s'agit donc ici d'effectuer un tri parmi les emplacements E_1, E_2,...en lesquels des mesures de puissance ont été acquises.

Selon un exemple de mise en oeuvre, lorsque toutes les mesures P1_i, P2_i,...associées à un emplacement E_i ont été acquises et comparées au seuil S_D, et avant que d'autres mesures en un autre emplacement ne soient acquises, l'étape E40 de détermination est stoppée dès lors qu'au moins une desdites mesure P1_i, P_2, ... acquises est déterminée inférieure au seuil S_D.

Ainsi, dans cet exemple, si le premier emplacement considéré correspond à l'emplacement initial, et qu'au moins une mesure acquise en ce premier emplacement est inférieure au seuil S_D, ledit dispositif récepteur D_RX reste immobile.

Procéder de cette manière permet non seulement de déterminer un emplacement de sorte que le signal rétrodiffusé peut être décodé par le dispositif récepteur D_RX, mais également d'optimiser la consommation d'énergie du dispositif récepteur D_RX.

A titre d'exemple illustratif, et en référence à la figure 1, le dispositif récepteur D_RX parcourt toute la partie correspondant à la moitié droite du carré formé par la zone Z_T. En outre, dans cet exemple, la comparaison des mesures acquises est réalisée une fois que toute ladite partie a été parcourue, les acquisitions étant réalisées selon un pas de distance égal à 2 cm entre chaque emplacement. A l'issue de son parcours, le dispositif récepteur D_RX a déterminé deux emplacements de réception respectivement localisés à l'intérieur des zones Z_5 et Z_6.

La figure 5 représente schématiquement un mode préféré de mise en oeuvre du procédé de détermination de la figure 4.

Dans ce mode préféré de mise en oeuvre, une pluralité d'emplacements E_i est considérée lors de l'étape E20 d'acquisition. En outre, et tel qu'illustré par la figure 5, ledit procédé de détermination comporte, lorsque plusieurs emplacements ont été déterminés comme étant des emplacements pour la réception, une étape E50 de sélection, parmi lesdits emplacements de réception, d'un emplacement, dit « emplacement optimal » E_OPT, dont la mesure de puissance associée est minimale parmi les mesures de puissance associées auxdits emplacements de réception.

Ledit emplacement optimal E_OPT désigne donc un emplacement en lequel la puissance reçue depuis la source 20 est minimisée, de sorte que la probabilité que des interférences y soient générées y soit également minimale lorsque le dispositif récepteur D_RX occupe ledit emplacement optimal E_OPT pour réceptionner le signal rétrodiffusé. De cette manière, la communication entre les dispositifs D_TX, D_RX est optimisée.

En reprenant l'exemple illustratif mentionné ci-dessus, et dans lequel deux emplacements ont été déterminés dans les zones Z_5 et Z_6, l'emplacement optimal E_OPT sélectionné correspond par exemple finalement à l'emplacement associé à la zone Z_5.

L'invention concerne également un procédé de communication entre le dispositif transmetteur D_TX et le dispositif récepteur D_RX.

La figure 6 représente, sous forme d'ordinogramme, les principales étapes dudit procédé de communication.

Tel qu'illustré par la figure 6, ledit procédé de rétrodiffusion comporte tout d'abord une étape F10 de détermination d'au moins un emplacement pour la réception.

Une telle étape F10 de détermination est réalisée conformément au procédé de détermination décrit auparavant.

Par la suite, et lorsqu'au moins un emplacement de réception a été déterminé et que le dispositif transmetteur D_TX est dans l'état de non-rétrodiffusion, ledit procédé de rétrodiffusion comporte une étape F20 de déplacement du dispositif récepteur D_RX dans la zone Z_T, de sorte à atteindre une position fixe POS_F fonction dudit au moins un emplacement déterminé.

Par exemple, ladite position fixe POS_F correspond à une position identique à celle occupée par le dispositif récepteur D_RX lorsqu'il a réalisé les mesures associées audit au moins un emplacement déterminé. Par "position identique", il faut comprendre que, si le dispositif récepteur D_RX est équipé de plusieurs antennes, les positions relatives (en termes de coordonnées géographiques) desdites antennes, lorsque le dispositif récepteur D_RX atteint ladite position fixe POS_F, correspondent exactement aux positions relatives des antennes au moment où les mesures associées audit au moins un emplacement ont été acquises.

Le choix d'une telle position fixe POS_F ne constitue qu'une variante d'implémentation de l'invention. Par exemple, le dispositif récepteur D_RX peut occuper une position fixe POS_F selon laquelle la position (en termes de coordonnées géographiques) de son centre de gravité soit identique à la position de son centre de gravité au moment où les mesures associées audit au moins un emplacement ont été acquises. Bien qu'il y ait une correspondance concernant la position du centre de gravité, les positions relatives des antennes pour ladite position fixe peuvent néanmoins différer des positions relatives des antennes au moment où les mesures associées audit au moins un emplacement ont été acquises.

Il est à noter que si plusieurs emplacements sont déterminés, la position fixe POS_F est par exemple fonction de la position du dispositif récepteur D_RX lorsqu'il a réalisé les mesures de puissance électromagnétique associées à l'un quelconque desdits emplacements déterminés.

Préférentiellement, lorsqu'un emplacement optimal E_OPT est sélectionné, ladite position fixe POS_F est identique à la position du dispositif transmetteur D_TX lorsqu'il a réalisé la mesure de puissance électromagnétique associée audit emplacement optimal E_OPT. On rappelle ici que cette mesure de puissance est associée à une seule sous-bande de la bande de travail B_T.

Une fois que le dispositif récepteur D_RX a atteint ladite position fixe POS_F, le procédé de communication comporte une étape F30 de rétrodiffusion, par le dispositif transmetteur D_TX, du signal ambiant. Pour ce faire, ledit dispositif D_TX passe de l'état de non-rétrodiffusion à l'état de rétrodiffusion.

Par ailleurs, le procédé de communication comporte également une étape F40 de réception, par le dispositif récepteur D_RX et dans la sous-bande associée à une mesure à partir de laquelle ledit au moins un emplacement a été déterminé, du signal ambiant rétrodiffusé.

En reprenant l'exemple décrit auparavant dans lequel plusieurs emplacements sont déterminés, et où la position fixe POS_F est fonction de la position du dispositif récepteur D_RX lorsqu'il a réalisé les mesures de puissance associées à l'un quelconque desdits emplacements déterminés, ladite sous-bande correspond à une sous-bande en laquelle une desdites mesures de puissance est inférieure au seuil S_D. Ainsi, si plusieurs mesures associées audit emplacement quelconque (considéré parmi les emplacements déterminés) sont inférieures audit seuil S_D, la sous-bande considérée correspond préférentiellement à la sous-bande en laquelle la mesure associée est minimale parmi lesdites mesures inférieures au seuil S_D.

En reprenant l'exemple préféré décrit auparavant, dans lequel un emplacement optimal E_OPT est sélectionné, la réception s'effectue dans la sous-bande associée à la mesure de puissance minimale.

Préférentiellement, les étapes F30 de rétrodiffusion et F40 de réception sont simultanément mises en oeuvre. Rien n'exclut toutefois de considérer un décalage temporel entre lesdites étapes F30 de rétrodiffusion et F40 de réception. Il est néanmoins implicite que les dispositifs transmetteur D_TX et récepteur D_RX communiquent entre eux dès lors que les périodes pendant lesquelles les étapes F30 de rétrodiffusion et F40 de réception sont respectivement mises en oeuvre se recouvrent au moins partiellement.

Dans un mode particulier de mise en oeuvre, les étapes de détermination F10 d'au moins un emplacement, de déplacement F20 du dispositif transmetteur de sorte à atteindre une position fixe POS_F, de rétrodiffusion F30 et de réception F40 sont itérées de manière récurrente.

Le fait de réaliser ces étapes de manière récurrente permet de prendre en compte la variabilité de l'environnement dans lequel sont positionnés le dispositif transmetteur D_TX et le dispositif récepteur D_RX.

Par exemple, lesdites étapes sont itérées de manière périodique, par exemple une fois par jour dans un environnement dans lequel la distribution de puissance est stable, ou bien davantage, par exemple une fois toutes les heures si la distribution de puissance est susceptible d'évoluer substantiellement toutes les heures.

L'invention a été décrite jusqu'à présent en considérant que le dispositif transmetteur D_TX était associé à un seul état de rétrodiffusion ainsi qu'un seul état de non-rétrodiffusion. L'invention reste néanmoins applicable dans le cas où le dispositif transmetteur D_TX est associé à une pluralité d'états de rétrodiffusion, ces états étant distincts entre eux en ce qu'ils sont mis en oeuvre grâce à des impédances respectives distinctes entre elles. On comprend bien entendu que l'état de non-rétrodiffusion reste quant à lui unique.

L'homme du métier sait adapter la configuration du dispositif transmetteur D_TX tel que représenté dans la figure 3 pour prendre en considération plusieurs états de rétrodiffusion. Par exemple, en référence à la figure 3, plusieurs impédances distinctes entre elles peuvent être agencées en parallèle entre les commutateurs 112, 113.

Par ailleurs, l'invention a également été décrite jusqu'à présent en considérant un unique dispositif transmetteur D_TX. L'invention reste néanmoins applicable dans le cas où une pluralité de dispositifs transmetteurs D_TX est considérée. Par exemple, lorsqu'une pluralité de dispositif transmetteurs D_TX est considérée, les étapes du procédé de détermination d'au moins un emplacement (étape E10 de parcours, étape E20 d'acquisition, étape E30 de comparaison, étape E40 de détermination, et étape E50 de sélection le cas échéant) sont mises en oeuvre par le dispositif récepteur D_RX lorsque lesdits dispositifs transmetteurs D_TX sont simultanément dans l'état de non-rétrodiffusion. Pour assurer une telle simultanéité, lesdits dispositifs transmetteurs D_TX sont par exemple synchronisés entre eux par GPS (acronyme de l'expression anglo-saxonne "Global Positioning System") et observent chacun une même durée de non-rétrodiffusion selon une période qui leur est également commune, une telle durée et une telle période étant par exemple définies dans une norme de télécommunication. Préférentiellement, lesdits dispositifs transmetteurs D_TX rétrodiffusent de manière simultanée le signal ambiant (étape F30).

Il apparait clairement à l'homme du métier que les dispositions décrites ci-avant dans le cas où plusieurs dispositifs transmetteurs D_TX synchronisés sont considérés s'appliquent indépendamment du nombre de dispositifs récepteurs D_RX considéré. Préférentiellement, lorsque plusieurs dispositifs récepteurs D_RX sont considérés, l'étape F40 de réception est exécutée pour chacun desdits dispositifs récepteurs D_RX simultanément à l'étape F30 de rétrodiffusion.

## Revendications

1. Procédé de détermination d'au moins un emplacement pour la réception, par au moins un dispositif récepteur (D_RX), d'un signal ambiant émis dans une bande fréquentielle, dite « bande d'émission », et destiné à être rétrodiffusé par au moins un dispositif transmetteur (D_TX) vers le dispositif récepteur (D_RX), ledit dispositif transmetteur (D_TX) étant associé à :
- des états de fonctionnement, dont au moins un état dit de « rétrodiffusion » ainsi qu'un état contraire dit de « non-rétrodiffusion »,
- une bande fréquentielle, dite « bande de travail », incluse dans ladite bande d'émission,
ledit dispositif récepteur (D_RX) étant associé à une zone (Z_T) ayant au moins une dimension supérieure à la moitié de la longueur d'onde correspondant à la fréquence centrale de ladite bande d'émission,
ledit procédé étant mis en oeuvre par le dispositif récepteur (D_RX) lorsque le dispositif transmetteur (D_TX) est dans l'état de non-rétrodiffusion et comportant :
- une étape (E10) de parcours du dispositif récepteur (D_RX) dans au moins une partie de ladite zone (Z_T),
- au cours du parcours du dispositif récepteur (D_RX), une étape (E20) d'acquisition, en au moins un emplacement (E_i) de ladite partie, de mesures de puissance électromagnétique (Pj_i) reçue par ledit dispositif récepteur (D_RX), lesdites mesures étant respectivement acquises dans des sous-bandes (SB_i) de ladite bande de travail,
- une étape (E30) de comparaison des mesures associées audit au moins un emplacement (E_i) avec un seuil déterminé (S_D), ledit au moins un emplacement étant déterminé (E40) comme étant un emplacement de réception si au moins une desdites mesures (Pj_i) est inférieure audit seuil.

2. Procédé selon la revendication 1, dans lequel une pluralité d'emplacements (E_i) est considérée lors de l'étape (E20) d'acquisition, ledit procédé comportant, lorsque plusieurs emplacements sont déterminés comme étant des emplacements de réception, une étape (E50) de sélection, parmi lesdits emplacements de réception, d'un emplacement, dit « emplacement optimal » (E_OPT), dont une mesure de puissance électromagnétique associée est minimale parmi les mesures de puissance associées auxdits emplacements de réception.

3. Procédé selon l'une quelconque des revendications 1 à 2, dans lequel le parcours du dispositif récepteur (D_RX) est réalisé dans toute la zone (Z_T).

4. Procédé selon l'une quelconque des revendications 1 à 3, dans lequel le parcours du dispositif récepteur (D_RX) est réalisé de manière autonome ou de manière assistée.

5. Procédé selon l'une quelconque des revendications 1 à 4, dans lequel une pluralité d'emplacements (E_i) est considérée lors de l'étape (20) d'acquisition, les mesures (Pj_i) étant acquises selon un pas de temps déterminé ou un pas de distance déterminé entre chaque emplacement dans ladite partie de la zone (Z_T).

6. Procédé selon l'une quelconque des revendications 1 à 5, dans lequel le dispositif transmetteur (D_TX) est associé à un schéma déterminé de fonctionnement dans le temps correspondant à des alternances entre l'état de non-rétrodiffusion et ledit au moins un état de rétrodiffusion, le dispositif récepteur (D_RX) ayant connaissance dudit schéma de fonctionnement.

7. Procédé selon l'une quelconque des revendications 1 à 6, dans lequel une pluralité de dispositifs transmetteurs (D_TX) est considérée, les étapes (E10, E20, E30, E40, E50) dudit procédé étant mises en oeuvre lorsque lesdits dispositifs transmetteurs (D_TX) sont simultanément dans l'état de non-rétrodiffusion.

8. Procédé de communication entre au moins un dispositif transmetteur (D_TX) et au moins un dispositif récepteur (D_RX), par rétrodiffusion d'un signal radio ambiant émis dans une bande fréquentielle, dite « bande d'émission », ledit dispositif transmetteur (D_TX) étant associé à :
- des états de fonctionnement, dont au moins un état dit de « rétrodiffusion » ainsi qu'un état contraire dit de « non-rétrodiffusion »,
- une bande fréquentielle, dite « bande de travail », incluse dans ladite bande d'émission,
ledit dispositif récepteur (D_RX) étant associé à une zone (Z_T) fonction de ladite bande d'émission, et ledit procédé comportant :
- une étape (F10) de détermination d'au moins un emplacement pour la réception selon un procédé conforme à l'une quelconque des revendications 1 à 7,
- lorsqu'au moins un emplacement a été déterminé et que le dispositif transmetteur (D_TX) est dans l'état de non-rétrodiffusion, une étape (F20) de déplacement du dispositif récepteur (D_RX) dans la zone (Z_T), de sorte à atteindre une position fixe (POS_F) fonction dudit au moins un emplacement déterminé,
- une étape (F30) de rétrodiffusion, par le dispositif transmetteur (D_TX), du signal ambiant,
- une étape (F40) de réception, par le dispositif récepteur (D_RX) et dans la sous-bande associée à une mesure à partir de laquelle ledit au moins un emplacement a été déterminé, du signal ambiant rétrodiffusé.

9. Procédé selon la revendication 8, dans lequel, lorsqu'un emplacement optimal (E_OPT) est déterminé, ladite position fixe (POS_F) correspond à la position du dispositif récepteur (D_RX) lorsqu'il a réalisé la mesure de puissance électromagnétique minimale associée audit emplacement optimal (E_OPT), la réception s'effectuant dans la sous-bande associée à ladite mesure de puissance minimale.

10. Procédé selon l'une quelconque des revendications 8 à 9, dans lequel les étapes de détermination (F10) d'au moins un emplacement, de déplacement (F20) du dispositif récepteur (D_RX) de sorte à atteindre une position fixe (POS_F), de rétrodiffusion (F30) et de réception (F40) sont itérées de manière récurrente.

11. Programme d'ordinateur comportant des d'instructions pour la mise en oeuvre d'un procédé de détermination d'au moins un emplacement selon l'une quelconque des revendications 1 à 7 ou d'un procédé de communication selon l'une quelconque des revendications 8 à 10 lorsque ledit programme est exécuté par un ordinateur.

12. Support d'enregistrement lisible par un ordinateur sur lequel est enregistré un programme d'ordinateur selon la revendication 11.

13. Dispositif récepteur (D_RX) pour la réception d'un signal radio ambiant émis dans une bande fréquentielle, dite « bande d'émission », et destiné à être rétrodiffusé par au moins un dispositif transmetteur (D_TX) vers ledit dispositif récepteur (D_RX), ledit dispositif transmetteur (D_TX) étant associé à :
- des états de fonctionnement, dont au moins un état dit de « rétrodiffusion » ainsi qu'un état contraire dit de « non-rétrodiffusion »,
- une bande fréquentielle, dite « bande de travail », incluse dans ladite bande d'émission,
ledit dispositif récepteur (D_RX) étant associé à une zone (Z_T) ayant au moins une dimension supérieure à la moitié de la longueur d'onde correspondant à la fréquence centrale de ladite bande d'émission et comportant :
- des moyens de déplacement dans ladite zone (Z_T),
- des moyens d'acquisition, configurés pour acquérir des mesures de puissance électromagnétique (Pj_i) reçue par ledit dispositif récepteur (D_RX) en au moins un emplacement (E_i) de ladite zone, les mesures associées à un emplacement étant respectivement acquises dans des sous-bandes (SB_i) de ladite bande de travail,
- un module de comparaison, configuré pour comparer les mesures (Pj_i) associées audit au moins un emplacement (E_i) avec un seuil déterminé (S_D),
- un module de détermination, configuré pour déterminer, lorsqu'au moins une desdites mesures est inférieure audit seuil (S_D), que l'emplacement associé auxdites mesures est un emplacement pour la réception du signal ambiant destiné à être rétrodiffusé.

14. Dispositif récepteur (D_RX) selon la revendication 13, ledit dispositif récepteur (D_RX) comportant un module de pilotage, configuré pour commander, lorsqu'au moins un emplacement pour la réception a été déterminé, un déplacement du dispositif récepteur (D_RX) dans la zone (Z_T), de sorte à atteindre une position fixe (POS_F) fonction dudit au moins un emplacement déterminé.

15. Système de communication comportant au moins un dispositif récepteur (D_RX) selon l'une quelconque des revendications 13 à 14 et au moins un dispositif transmetteur (D_TX).

## Patentansprüche

1. Verfahren zur Bestimmung mindestens eines Orts zum Empfangen, durch mindestens eine Empfangsvorrichtung (D_RX), eines Umgebungssignals, das in einem Frequenzband, "Sendeband" genannt, gesendet wird und dazu bestimmt ist, von mindestens einer Sendevorrichtung (D_TX) zu der Empfangsvorrichtung (D_RX) rückgestreut zu werden, wobei die Sendevorrichtung (D_TX) zugeordnet ist zu:
- Betriebszuständen, darunter mindestens ein sogenannter "Rückstreu"-Zustand sowie ein gegenteiliger sogenannter "Nicht-Rückstreu"-Zustand,
- einem Frequenzband, "Arbeitsband" genannt, das in dem Sendeband enthalten ist,
wobei die Empfangsvorrichtung (D_RX) einer Zone (Z_T) zugeordnet ist, die mindestens ein Maß hat, das größer als die Hälfte der Wellenlänge ist, die der zentralen Frequenz des Sendebands entspricht,
wobei das Verfahren von der Empfangsvorrichtung (D_RX) ausgeführt wird, wenn die Sendevorrichtung (D_TX) in dem Nicht-Rückstreu-Zustand ist, und umfasst:
- einen Schritt (E10) des Bewegens der Empfangsvorrichtung (D_RX) in mindestens einem Teil der Zone (Z_T),
- während des Bewegens der Empfangsvorrichtung (D_RX) einen Schritt (E20) des Erfassens, an mindestens einem Ort (E_i) des Teils, von Messungen der elektromagnetischen Leistung (Pj_i), die von der Empfangsvorrichtung (D_RX) empfangen wird, wobei die Messungen jeweils in Teilbändern (SB_i) des Arbeitsbands erfasst werden,
- einen Schritt (E30) des Vergleichens der Messungen, die dem mindestens einen Ort (E_i) zugeordnet sind, mit einem bestimmten Schwellenwert (S_D), wobei der mindestens eine Ort als ein Empfangsort bestimmt (E40) wird, wenn mindestens eine der Messungen (Pj_i) unter dem Schwellenwert liegt.

2. Verfahren nach Anspruch 1, wobei eine Mehrzahl von Orten (E_i) bei dem Schritt (E20) des Erfassens betrachtet wird, wobei das Verfahren, wenn mehrere Orte als Empfangsorte bestimmt werden, einen Schritt (E50) des Auswählens, unter den Empfangsorten, eines Orts, "optimaler Ort" (E_OPT) genannt, umfasst, für den eine zugeordnete Messung der elektromagnetischen Leistung unter den Leistungsmessungen, die den Empfangsorten zugeordnet sind, minimal ist.

3. Verfahren nach einem der Ansprüche 1 bis 2, wobei das Bewegen der Empfangsvorrichtung (D_RX) in der gesamten Zone (Z_T) durchgeführt wird.

4. Verfahren nach einem der Ansprüche 1 bis 3, wobei das Bewegen der Empfangsvorrichtung (D_RX) autonom oder unterstützt durchgeführt wird.

5. Verfahren nach einem der Ansprüche 1 bis 4, wobei eine Mehrzahl von Orten (E_i) bei dem Schritt (20) des Erfassens betrachtet wird, wobei die Messungen (Pj_i) gemäß einem bestimmten Zeitschritt oder einem bestimmten Distanzschritt zwischen jedem Ort in dem Teil der Zone (Z_T) erfasst werden.

6. Verfahren nach einem der Ansprüche 1 bis 5, wobei die Sendevorrichtung (D_TX) einem bestimmten Betriebsschema in der Zeit zugeordnet ist, das Wechseln zwischen dem Nicht-Rückstreu-Zustand und dem mindestens einen Rückstreu-Zustand entspricht, wobei die Empfangsvorrichtung (D_RX) Kenntnis des Betriebsschemas hat.

7. Verfahren nach einem der Ansprüche 1 bis 6, wobei eine Mehrzahl von Sendevorrichtungen (D_TX) betrachtet wird, wobei die Schritte (E10, E20, E30, E40, E50) des Verfahrens ausgeführt werden, wenn die Sendevorrichtungen (D_TX) gleichzeitig in dem Nicht-Rückstreu-Zustand sind.

8. Kommunikationsverfahren zwischen mindestens einer Sendevorrichtung (D_TX) und mindestens einer Empfangsvorrichtung (D_RX) durch Rückstreuen eines Umgebungsfunksignals, das in einem Frequenzband, "Sendeband" genannt", gesendet wird, wobei die Sendevorrichtung (D_TX) zugeordnet ist zu:
- Betriebszuständen, darunter mindestens ein sogenannter "Rückstreu"-Zustand sowie ein gegenteiliger sogenannter "Nicht-Rückstreu"-Zustand,
- einem Frequenzband, "Arbeitsband" genannt, das in dem Sendeband enthalten ist,
wobei die Empfangsvorrichtung (D_RX) einer Zone (Z_T) zugeordnet ist, die von dem Sendeband abhängig ist, und wobei das Verfahren umfasst:
- einen Schritt (F10) des Bestimmens mindestens eines Orts zum Empfangen gemäß einem Verfahren nach einem der Ansprüche 1 bis 7,
- wenn mindestens ein Ort bestimmt worden ist und die Sendevorrichtung (D_TX) in dem Nicht-Rückstreu-Zustand ist, einen Schritt (F20) des Verlagerns der Empfangsvorrichtung (D_RX) in der Zone (Z_T), so dass sie eine feste Position (POS_F) erreicht, die von dem mindestens einen bestimmten Ort abhängig ist,
- einen Schritt (F30) des Rückstreuens des Umgebungssignals durch die Sendevorrichtung (D_TX),
- einen Schritt (F40) des Empfangens, durch die Empfangsvorrichtung (D_RX) und in dem Teilband, das einer Messung zugeordnet ist, anhand welcher der mindestens eine Ort bestimmt worden ist, des rückgestreuten Umgebungssignals.

9. Verfahren nach Anspruch 8, wobei, wenn ein optimaler Ort (E_OPT) bestimmt wird, die feste Position (POS_F) der Position der Empfangsvorrichtung (D_RX) entspricht, wenn sie die minimale Messung der elektromagnetischen Leistung, die dem optimalen Ort (E_OPT) zugeordnet ist, durchgeführt hat, wobei der Empfang in dem Teilband erfolgt, das der minimalen Leistungsmessung zugeordnet ist.

10. Verfahren nach einem der Ansprüche 8 bis 9, wobei die Schritte des Bestimmens (F10) mindestens eines Orts, des Verlagerns (F20) der Empfangsvorrichtung (D_RX), so dass sie eine feste Position (POS_F) erreicht, des Rückstreuens (F30) und des Empfangens (F40) wiederholt iteriert werden.

11. Computerprogramm mit Anweisungen zum Ausführen eines Verfahrens zur Bestimmung mindestens eines Orts nach einem der Ansprüche 1 bis 7 oder eines Kommunikationsverfahrens nach einem der Ansprüche 8 bis 10, wenn das Programm von einem Computer ausgeführt wird.

12. Computerlesbares Speichermedium, auf dem ein Computerprogramm nach Anspruch 11 gespeichert ist.

13. Empfangsvorrichtung (D_RX) zum Empfangen eines Umgebungsfunksignals, das in einem Frequenzband, "Sendeband" genannt, gesendet wird und dazu bestimmt ist, von mindestens einer Sendevorrichtung (D_TX) zu der Empfangsvorrichtung (D_RX) rückgestreut zu werden, wobei die Sendevorrichtung (D_TX) zugeordnet ist zu:
- Betriebszuständen, darunter mindestens ein sogenannter "Rückstreu"-Zustand sowie ein gegenteiliger sogenannter "Nicht-Rückstreu"-Zustand,
- einem Frequenzband, "Arbeitsband" genannt, das in dem Sendeband enthalten ist,
wobei die Empfangsvorrichtung (D_RX) einer Zone (Z_T) zugeordnet ist, die mindestens ein Maß hat, das größer als die Hälfte der Wellenlänge ist, die der zentralen Frequenz des Sendebands entspricht, und umfasst:
- Mittel zum Verlagern in der Zone (Z_T),
- Erfassungsmittel, die dazu ausgestaltet sind, Messungen der elektromagnetischen Leistung (Pj_i) zu erfassen, die von der Empfangsvorrichtung (D_RX) an mindestens einem Ort (E_i) der Zone empfangen wird, wobei die einem Ort zugeordneten Messungen jeweils in Teilbändern (SB_i) des Arbeitsbands erfasst werden,
- ein Vergleichsmodul, das dazu ausgestaltet ist, die Messungen (Pj_i), die dem mindestens einen Ort (E_i) zugeordnet sind, mit einem bestimmten Schwellenwert (S_D) zu vergleichen,
- ein Bestimmungsmodul, das dazu ausgestaltet ist zu bestimmen, wenn mindestens eine der Messungen unter dem Schwellenwert (S_D) liegt, dass der den Messungen zugeordnete Ort ein Ort zum Empfangen des Umgebungssignals ist, das dazu bestimmt ist, rückgestreut zu werden.

14. Empfangsvorrichtung (D_RX) nach Anspruch 13, wobei die Empfangsvorrichtung (D_RX) ein Steuerungsmodul umfasst, das dazu ausgestaltet ist, wenn mindestens ein Ort zum Empfangen bestimmt worden ist, eine Verlagerung der Empfangsvorrichtung (D_RX) in der Zone (Z_T) zu steuern, so dass sie eine feste Position (POS_F) erreicht, die von dem mindestens einen bestimmten Ort abhängig ist.

15. Kommunikationssystem, das mindestens eine Empfangsvorrichtung (D_RX) nach einem der Ansprüche 13 bis 14 und mindestens eine Sendevorrichtung (D_TX) umfasst.

## Claims

1. Method for determining at least one location for reception, by at least one receiving device (D_RX), of an ambient signal emitted in a frequency band, called the "emission band", and intended to be backscattered by at least one transmitting device (D_TX) to the receiving device (D_RX), said transmitting device (D_TX) being associated with:
- operating states, including at least one state called the "backscattering" state and a contrary state called the "non-backscattering" state,
- a frequency band, called the "working band", included in said emission band,
said receiving device (D_RX) being associated with a zone (Z_T) having at least one dimension larger than half the wavelength corresponding to the central frequency of said emission band,
said method being implemented by the receiving device (D_RX) when the transmitting device (D_TX) is in the non-backscattering state and comprising:
- a step (E10) of moving the receiving device (D_RX) through at least one portion of said zone (Z_T),
- during the movement of the receiving device (D_RX), a step (E20) of acquiring, in at least one location (E_i) in said portion, measurements (Pj_i) of the electromagnetic power received by said receiving device (D_RX), said measurements being acquired in respective sub-bands (SB_i) of said working band,
- a step (E30) of comparing the measurements associated with said at least one location (E_i) with a determined threshold (S_D), said at least one location being determined (E40) to be a reception location if at least one of said measurements (Pj_i) is lower than said threshold.

2. Method according to Claim 1, wherein a plurality of locations (E_i) is considered in the acquiring step (E20), said method comprising, when a plurality of locations are determined to be reception locations, a step (E50) of selecting, from said reception locations, a location, called the "optimal location" (E_OPT), an associated electromagnetic-power measurement of which is minimum among the power measurements associated with said receiving locations.

3. Method according to either one of Claims 1 and 2, wherein the receiving device (D_RX) is moved throughout the zone (Z_T).

4. Method according to any one of Claims 1 to 3, wherein the receiving device (D_RX) is moved autonomously or in an assisted manner.

5. Method according to any one of Claims 1 to 4, wherein a plurality of locations (E_i) is considered in the acquiring step (20), the measurements (Pj_i) being acquired with a determined time interval or a determined distance interval between each location in said portion of the zone (Z_T).

6. Method according to any one of Claims 1 to 5, wherein the transmitting device (D_TX) is associated with a determined scheme of operation as a function of time corresponding to alternations between the non-backscattering state and said at least one backscattering state, the receiving device (D_RX) having knowledge of said scheme of operation.

7. Method according to any one of Claims 1 to 6, wherein a plurality of transmitting devices (D_TX) is considered, the steps (E10, E20, E30, E40, E50) of said method being implemented when said transmitting devices (D_TX) are simultaneously in the non-backscattering state.

8. Method of communication between at least one transmitting device (D_TX) and at least one receiving device (D_RX), by backscattering an ambient radio signal emitted in a frequency band, called the "emission band", said transmitting device (D_TX) being associated with:
- operating states, including at least one state called the "backscattering" state and a contrary state called the "non-backscattering" state,
- a frequency band, called the "working band", included in said emission band,
said receiving device (D_RX) being associated with a zone (Z_T) dependent on said emission band, and said method comprising:
- a step (F10) of determination of at least one location for reception using a method according to any one of Claims 1 to 7,
- when at least one location has been determined and the transmitting device (D_TX) is in the non-backscattering state, a step (F20) of movement of the receiving device (D_RX) through the zone (Z_T), so as to reach a fixed position (POS_F) dependent on said at least one determined location,
- a step (F30) of backscatter, by the transmitting device (D_TX), of the ambient signal,
- a step (F40) of reception, by the receiving device (D_RX) and in the sub-band associated with a measurement on the basis of which said at least one location was determined, of the backscattered ambient signal.

9. Method according to Claim 8, wherein, once an optimal location (E_OPT) has been determined, said fixed position (POS_F) corresponds to the position of the receiving device (D_RX) when it made the minimum electromagnetic-power measurement associated with said optimal location (E_OPT), reception occurring in the sub-band associated with said minimum power measurement.

10. Method according to either one of Claims 8 and 9, wherein the steps of determination (F10) of at least one location, of movement (F20) of the receiving device (D_RX) so as to reach a fixed position (POS_F), of backscatter (F30) and of reception (F40) are iterated recursively.

11. Computer program comprising instructions for implementing a method for determining at least one location according to any one of Claims 1 to 7 or a method of communication according to any one of Claims 8 to 10 when said program is executed by a computer.

12. Computer-readable storage medium on which a computer program according to Claim 11 is stored.

13. Receiving device (D_RX) for receiving an ambient radio signal emitted in a frequency band, called the "emission band", and intended to be backscattered by at least one transmitting device (D_TX) to said receiving device (D_RX), said transmitting device (D_TX) being associated with:
- operating states, including at least one state called the "backscattering" state and a contrary state called the "non-backscattering" state,
- a frequency band, called the "working band", included in said emission band,
said receiving device (D_RX) being associated with a zone (Z_T) having at least one dimension larger than half the wavelength corresponding to the central frequency of said emission band and comprising:
- means for moving through said zone (Z_T),
- acquiring means, configured to acquire measurements (Pj_i) of the electromagnetic power received by said receiving device (D_RX) in at least one location (E_i) in said zone, the measurements associated with a location being acquired in respective sub-bands (SB_i) of said working band,
- a comparing module, configured to compare the measurements (Pj_i) associated with said at least one location (E_i) with a determined threshold (S_D),
- a determining module, configured to determine, when at least one of said measurements is below said threshold (S_D), that the location associated with said measurements is a location for reception of the ambient signal intended to be backscattered.

14. Receiving device (D_RX) according to Claim 13, said receiving device (D_RX) comprising a control module, configured to control, when at least one location for reception has been determined, a movement of the receiving device (D_RX) through the zone (Z_T), so as to reach a fixed position (POS_F) dependent on said at least one determined location.

15. Communication system comprising at least one receiving device (D_RX) according to either one of Claims 13 and 14 and at least one transmitting device (D_TX).
